# NEUE EUROPÄISCHE PATENTSCHRIFT

(11) **EP 0 952 364 B2**
(45) Veröffentlichungstag und Bekanntmachung des Hinweises auf die Entscheidung über den Einspruch: **02.11.2005**
(45) Hinweis auf die Patenterteilung: 31.10.2001
(21) Anmeldenummer: 97121490.3
(22) Anmeldetag: 06.12.1997
(51) Int. Cl.: F16D 3/223

(54) **Verfahren zur Fertigbearbeitung von für Gleichlaufgelenke bestimmten Kugelkäfigen**
Method for finishing cages in universal joints
Procédé de finition des cages pour joints universels

(43) Veröffentlichungstag der Anmeldung: 27.10.1999
(73) Patentinhaber: Iprotec Maschinen- und Edelstahlprodukte GmbH, 32469 Petershagen-Friedewalde (DE)
(72) Erfinder:
(74) Vertreter: Bauer, Wulf

(56) Entgegenhaltungen:
- EP-A- 0 128 870
- DE-A- 4 034 516
- DE-A- 4 034 517
- DE-A- 4 212 238
- US-A- 4 575 362
- US-A- 5 410 902
- Prospect "Form -Dreh-Zentrum FDZ 100" der Heckler & Koch Maschinen- und Anlagenbau GmbH
- Fertigungsverfahren Band 1, Drehen, Fräsen, Bohren, W. König, VDI-Verlag, 1990
- Eidesstattliche Versicherung von Herrn H-H Welschof im Lochseif 68a. D63517 Rodenbach
- Eidesstattliche Versicherung von Herrn Dieter Kroll per Adresse, SW Swäbische Werkzeugmaschinen GmbH Seedorferstrasse 91 D-78713 Schramberg-Waldmössingen
- Unrunddrehen mit dem CNC-Formdrehzentrum FDZ-100, Dieter Hofmann, VDI-Z 133(1991); nr. 6
- Zeitschrift für Maschinenbau, Konstruktion und Fertigung 5/94 Hartdrehen statt Schleifen; Preis, Aschner, Kunz; Werkstatt und Betrieb 127(1994)5
- Asymmetrische Werkstücke mit einem schnellansprechenden Servosystem drehen; D. Szepesi et al; Werkstatt und Betrieb 123(1990)5
- Das Mehrkantdrehen - Grundlagen und Problematik; Fingerle, Sonderdruck aus: der Maschinenmarkt, 67. Jg. Nr. 28, 07.04.1961
- Prospekt WERA-Profilator

## Beschreibung

Die Erfindung betrifft ein Verfahren zur Fertigbearbeitung von für Gleichlaufgelenke bestimmten Kugelhäfigen die mit kugelförmigen inneren und äußeren Lagerflächen und Kugeltaschen für die Aufnahme von drehmomentübertragenden Kugeln versehen sind.

Die gleichzeitige europäische Anmeldungen des Anmelders IPROTEC, EP.A.0 926 373 und EP.A. 0 921 329, betreffen ähnliche Verfahren zur Fertigbearbeitung der Kugelschale bzw. des Kugelsterns für Gleichlaufgelenbe.

Bei Kraftfahrzeugen mit Vorderradantrieb wercen die gelenkten Räder angetrieben. Deshalb müssen Vorderradachswellen Gelenke haben, die sowohl das Ein- und Ausfedem der Räder als auch deren Lenkeinschlag zulassen. Um einen möglichst gleichförmigen Antrieb der Räder zu ermöglichen, werden hierzu Gleichlaufgelenke (homokinetische Gelenke) verwendet. Bei Gelenken an Vorderachswellen werden hierbei unter anderem als Topfgelenke ausgebildete Gleichlauf-Festgelenke verwendet, während bei Gelenken an Hinterachswellen als Topfgelenke ausgebildete Gleichlauf-Verschiebegelenke verwendet werden, die neben einer Beugung des Gelenkes eine axiale Verschiebung ermöglichen.

Diese Topfgelenke bestehen aus einem auf das radseitige Achswellenende aufgesetzten Kugelstem, auf dem der Kugelkäfig mit Kugeln sowie die mit der Radantriebswelle verbundene Kugelschale sitzen. Bei dem Gleichlauf-Festgelenk weisen Kugelschale und Kugelstem gekrümmte Bahnen auf, auf denen sich die Kugeln bewegen. Bei dem Gleichlauf-Verschiebegelenk sind die Bewegungsbahnen an Kugelschale und Kugelstem eben ausgebildet.

Bei den aus der Praxis bekannten, aus Kugelstem, Kugelkäfig und Kugelschale bestehenden Gleichlaufgelenken werden die mit kugelförmigen inneren und äußeren Lagerflächen und Kugeltaschen für die Aufnahme der drehmomentübertragenden Kugeln versehenen Kugelkäfige zunächst in einer Vielzahl von Schmiede-, Stanz- und Dreharbeitsschritten auf verschiedenen Maschinen als Rohlinge hergestellt. Ausgehend von diesen Rohlingen erfolgt die Fertigbearbeitung der Kugelkäfige wiederum in einer Vielzahl von Arbeitsschritten auf verschiedenen Maschinen, wobei als spannabhebende Bearbeitungsverfahren insbesondere Schleifverfahren zur Bearbeitung der Lagerflächen zur Bearbeitung der Anlageflächen der Kugeln in den Kugeltaschen verwendet werden. Ein solches Herstellverfahren ist beispielsweise aus der EP 0 128 870 bekannt. Nachteilig bei diesem bekannten Fertigbearbeitungsverfahren ist, daß die Endbearbeitung eines jeden Kugelkäfigs mehrere verschiedene Arbeitsschritte umfaßt, die auf unterschiedlichen Maschinen ausgeführt werden müssen. Aufgrund der Vielzahl von Arbeitsschritten auf verschiedenen Maschinen, die nicht durchgehend automatisch ausgeführt werden können, ist die Endbearbeitung der Kugelkäfige zeitaufwendig und teuer. Darüber hinaus treten aufgrund der verschiedenen Umspannungen Fehler auf, so daß Toleranzen nur in bestimmten Grenzen möglich sind.

Die US 4 575 362 zeigt einen Kugelkafij eines Gleichlaufdrehgelenks, das durch Drehen hergestellt, anschließ gehärtet und schließlich geschliffen wird. Insbesondere werden Umspannflächen hegestellt, die anschließend geschliffen werden.

Die EP 0128870 beschreibt, dass es notwendig ist, einen Kugelkafig eines Gleichlaufdrehgelenkes nach dem Harten zu schleifen. Das Drehen innerer und außerer Lagerflächen wird beschrieben.

Die Zeitschrift "Zeitschrift für Maschinenbar, Konstruktion und Fertigung 5/94" beschreibt Schwierigkaten, die beim Hartdrehen statt Schleifen gegeben sind. Das Hartdrehen mit unter brochenem Schnitt ist bei Auswalh eines geeigneten Werzeugwerkstoffes möglich. Die Artikel Umrunddrehen mit dem CNC-Formdrehzentrum FDZ 100" aus des Zeitschrift "VDI-Zeitung" 133 (1991), Nr. 6 sowie ein Prospekt über der Forum-Dreh-Zentrum FDZ 100 der Heckler und Kech Maschinen-und Anlegenbau GmbH beschreiben, dass es möglich ist Bauteile mit einem Umrunddrehverfahren herzustellen. Der Prospekt zeigt ein Bild eines Kugelkafijs.

Der Erfindung liegt die Aufgabe zugrunde, ein Verfahren zur Fertigbearbeitung von für Gleichlaufgelenke bestimmten Kugelkäfigen bereitzustellen, welches eine einfache, kostengünstige und vollautomatisierbare Fertigbearbeitung der Kugelkäfige ermöglicht, die darüber hinaus mit einer erhöhten Genauigkeit erfolgt.

Die **Lösung** dieser Aufgabenstellung erfolgt erfindungsgemäß durch ein Verfahren mit den Verfahrensschritten des Anspruchs 1.

Durch die erfindungsgemäße Reduzierung der zur Fertigbearbeitung notwendigen Arbeitsschritte auf eine Hartdrehbearbeitung ist es möglich, die Fertigbearbeitung von Kugelkäfigen schnell, kostengünstig, vollautomatisch und mit erhöhter Genauigkeit durchzuführen. Dadurch, daß zur Fertigbearbeitung der Kugelkäfige nach dem erfindungsgemäßen Verfahren nur noch Hartdrehbearbeitungen der Rohlinge notwendig sind, ist es möglich, daß sämtliche Drehbearbeitungen eines Kugelkäfigs auf derselben Drehmaschine erfolgen. Gegenüber der bekannten Fertigbearbeitung in verschiedenen Arbeitsschritten auf unterschiedlichen Maschinen weist das erfindungsgemäße Fertigbearbeitungsverfahren einen eindeutigen Zeit-, Kosten- und Genauigkeitsvorteil auf.

Gemäß einer praktischen Ausführungsform der Erfindung wird vorgeschlagen, daß zuerst die inneren kugelringförmigen Lagerflächen, eine stirnseitige Anlagefläche und zwei die innere Lagerfläche begrenzende ringförmige, zylindrische Spannflächen in einer Aufspannung gedreht werden und daß der derart bearbeitete Kugelkäfig mittels der zylindrischen Spannflächen und der stirnseitigen Anlagefläche umgespannt wird. Um eine kontinuierliche Bearbeitung mit nur einer Umspannung des Werkstücks zu ermöglichen, erfolgt in dem ersten Arbeitsschritt bei einer ersten Aufspannung des Werkstücks neben der Fertigbearbeitung der nneren kugelringförmigen Lagerfläche die Ausbildung verschiedener Aufspannflächen, die benötigt werden, um in einer nachfolgenden Aufspannung die restlichen Flächen in einer Hartdrehbearbeitung bearbeiten zu können.

Weiterhin wird erfindungsgemäß vorgeschlagen, daß nach erfolgter Umspannung die äußere kugelringförmige Lagerfläche und die in den Kugeltaschen ausgebildeten Anlageflächen für jeweils eine Kugel durch Hartdrehen bearbeitet werden. Durch das Umspannen des teilbearbeiteten Kugelkäfigs, welches vollautomatisch auf derselben Drehmaschine erfolgen kann, ist es ohne Zeitverlust möglich, die noch verbleibenden Flächen in einem weiteren Hartdrehverfahren fertigzubearbeiten. Insgesamt zeigt sich somit, daß die gesamte Fertigbearbeitung eines Kugelkäfigs durch eine Hartdrehbearbeitung auf derselben Drehmaschine erfolgen kann, wobei es zur Bearbeitung der unterschiedlichen Flächen lediglich notwendig ist, in einem ersten Arbeitsschritt Aufspannflächen auszubilden, die zum Halten des Werkstücks im zweiten Drehabschnitt notwendig sind. Da einerseits nur Drehbeabeitungsverfahren verwendet werden und andererseits diese auf derselben Maschine durchgeführt werden können, ist es möglich, die erfindungsgemäße Fertigbearbeitung vollautomatisch und somit schnell und kostengünstig durchzuführen.

Gemäß einer bevorzugten Ausführungsform der Erfindung erfolgt die Bearbeitung der beiden gegenüberliegenden Anlageflächen gleichzeitig, d. h. bei jedem Eintauchen des Drehstahls in eine Kugeltasche.

Schließlich wird gemäß einer praktischen Ausführungsform der Erfindung vorgeschlagen, daß die beiden gegenüberliegenden Anlageflächen nacheinander durch Zustellung des Drehstahls in axialer Richtung der Werkstückspindelachse erfolgt. Als Drehverfahren wird ein Hartdrehverfahren verwendet , um auch gehärtete Werkstücke bearbeiten zu können.

Weitere Merkmale und Vorteile der Erfindung ergeben sich aus der nachfolgenden Beschreibung der zugehörigen Zeichnung, in der ein Bearbeitungsschritt des erfindungsgemäßen Fertigbearbeitungsverfahrens schematisch dargestellt ist. In der Zeichnung zeigt:
- Fig. 1: eine Seitenansicht eines fertigbearbeiteten Kugelkäfigs und
- Fig. 2: einen Längsschnitt entlang der Schnittlinie II-II gemäß Fig. 1.

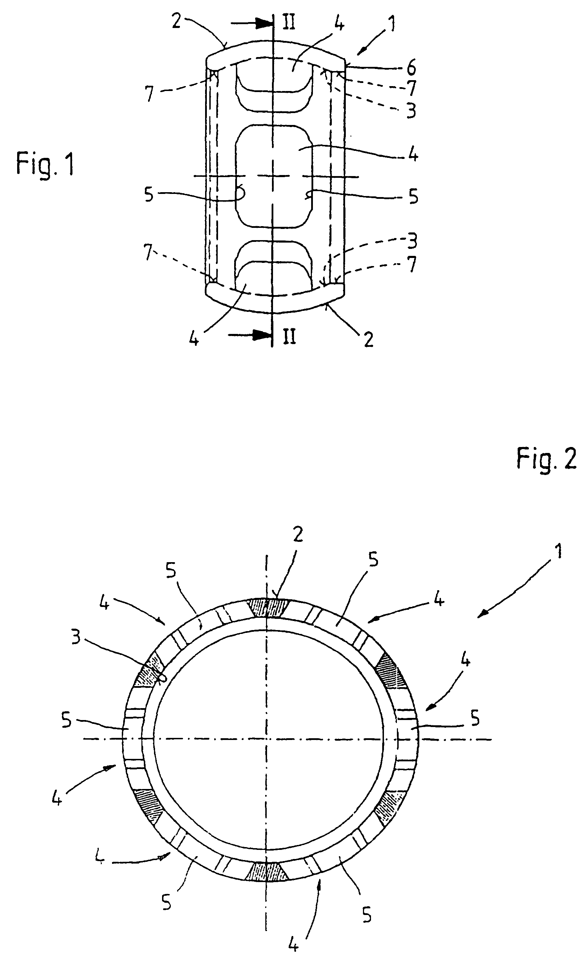

Fig. 1 zeigt eine Seitenansicht eines fertigbearbeiteten Kugelkäfigs 1. Dieser Kugelkäfig 1 weist eine kugelringförmige äußere Lagerfläche 2, eine kugelringförmige innere Lagerfläche 3 sowie Kugeltaschen 4 zur Aufnahme der - nicht dargestellten - drehmomentübertragenden Kugeln auf.

Ausgehend von einem aus einem hohlen Rohr gefertigen Kugelkäfig-Rohling erfolgt die Fertigbearbeitung des Kugelkäfigs 1 ausschließlich durch Hartdrehbearbeitungsverfahren, die auf ein und derselben Drehmaschine durchführbar sind. Um diese Drehverfahren zur Bearbeitung der äußeren und inneren Lagerflächen 2, 3 sowie zur Bearbeitung von Anlageflächen 5 der Kugeltaschen 4 für jeweils eine Kugel auf einer Maschine durchführen zu können, muß der Kugelkäfig 1 einmal umgespannt werden. Dieses Umspannen kann jedoch automatisch erfolgen, so daß insgesamt gesehen die Fertigbearbeitung des Kugelkäfigs 1 vollautomatisch und quasi kontinuierlich erfolgt.

Das Verfahren zur Fertigbearbeitung des Kugelkäfigs 1 erfolgt folgendermaßen:

In einer ersten Aufspannung wird der zu bearbeitende Kugelkäfig 1 verdrehfest von außen so gehalten, daß zuerst die innere kugelringförmige Lagerfläche 3 hartgedreht werden kann. Während dieses ersten Dreharbeitsschrittes erfolgt gleichzeitig die Ausbildung einer stirnseitigen Anlagefläche 6 sowie zweier zylindrischer Spannflächen 7, die die innere Lagerfläche 3 begrenzen. Diese zylindrischen Spannflächen 7 sowie die stirnseitige Anlagefläche 6 dienen zur Aufnahme bzw. Anlage von Spannelementen, die in dem nachfolgenden Arbeitsschritt die Bearbeitung der äußeren Lagerfläche 2 sowie der Anlageflächen 5 in den Kugeltaschen 4 ermöglichen.

Nach der Fertigbearbeitung der inneren Lagerfläche 3 sowie der Ausbildung der stirnseitigen Anlagefläche 6 sowie der Spannflächen 7 erfolgt das Umspannen des derart bearbeiteten Kugelkäfigs 1. In dieser Umspannung wird der Kugelkäfig 1 nunmehr verdrehsicher von innen gehalten, so daß in dem zweiten Drehbearbeitungsschritt die äußere Lagerfläche 2 sowie die sich in Achsrichtung des Kugelkäfigs 1 gegenüberliegenden Anlageflächen 5 in den Kugeltaschen 4 durch Hartdrehbearbeitet werden können.

Fig. 2 zeigt schematisch einen Längsschnitt durch einen Kugelkäfig 1 während der Drehbearbeitung der Anlageflächen 5 in den Kugeltaschen 4. Die Bearbeitung der Anlageflächen 5 der Kugeltaschen 4 kann dadurch erfolgen, daß der Drehstahl auf einer achsparallel zur Werkstückspindel versetzten Werkzeugspindel befestigt ist, wobei die beiden Spindeln in einem vorgegebenen Drehzahlverhältnis zueinander angetrieben werden. Die Zustellung des Drehstahls zur Bearbeitung der Anlageflächen 5 erfolgt durch Verringerung des Achsabstandes der beiden Spindeln. Durch die Synchronisation der beiden Spindeldrehzahlen ist es möglich, den Drehstahl so zu führen, daß dieser jeweils exakt in die Kugeltaschen 4 eintaucht und eine Bearbeitung der Anlageflächen 5 erfolgt. Je nach Ausführungsform des Verfahrens ist es dabei möglich, entweder nur eine Anlagefläche 5 oder gleichzeitig beide Anlageflächen 5 einer jeden Kugeltasche 4 drehend zu bearbeiten.

Wie aus Fig. 2 weiterhin ersichtlich ist, ist es möglich, die Bearbeitung der Anlageflächen 5 der Kugeltaschen 4 so zu steuern, daß wirklich nur der Teil der Kugeltaschen 4 als Anlageflächen 5 für die Kugeln bearbeitet wird, an denen eine Kugel in den Kugeltaschen 4 aufliegt.

Durch diese Optimierung der Bearbeitung auf die notwendigen Bearbeitungsflächen sowie die Reduzierung der Fertigbearbeitungsschritte auf eine Hartdrehbearbeitung, wobei alle Drehbearbeitungen auf derselben Drehmaschine erfolgen können, ist es mit dem veranstehend beschriebenen Verfahren möglich, Kugelkäfige 1 schnell, kostengünstig und vollautomatisch fertigzubearbeiten.

### Bezugszeichenliste

- 1: Kugelkäfig
- 2: äußere Lagerfläche
- 3: innere Lagerfläche
- 4: Kugeltasche
- 5: Anlagefläche
- 6: stirnseitige Anlagefläche
- 7: zylindrische Spannfläche

## Patentansprüche

1. Verfahren zur Fertigbearbeitung von gehärteten Kugelkäfigen, die für Gleichlaufgelenke bestimmt sind und die mit kugelförmigen inneren und äußeren Lagerflächen (3, 2) und Kugeltaschen (4) für die Aufnahme von drehmomentübertragenden Kugeln versehen sind,
**gekennzeichnet durch** die Verfahrensschritte
- Hartdrehen des Kugelkäfigs (1) zur Ausbildung der inneren kugelringförmigen Lagerfläche (3), einer stirnseitigen Anlagefläche (6) und zweier die innere Lagerfläche (3) begrenzenden ringförmige zylindrische Spannflächen (7),
- Umspannen des Kugelkäfigs (1) mittels der zylindrischen Spannflächen (7) und der stirnseitigen Anlagefläche (6),
- Hartdrehen des Kugelkäfigs zur Ausbildung der äußeren kugelringförmigen Lagerfläche (2) und in den Kugeltaschen (4) auszubildenden Anlageflächen (5) für jeweils eine Kugel, die einander in Achsrichtung gegenüber liegen.

2. Verfahren nach Anspruch 1, **dadurch gekennzeichnet, daß** sämtliche Drehbearbeitungen eines Kugelkäfigs (1) auf derselben Drehmaschine erfolgen.

3. Verfahren nach Anspruch 1 oder 2, **dadurch gekennzeichnet, daß** die beiden gegenüberliegenden Anlageflächen (5) einer jeden Kugeltasche (4) gleich zeitig bearbeitet werden.

4. Verfahren nach Anspruch 1 oder 2, **dadurch gekennzeichnet, daß** die Bearbeitung der beiden geger überliegenden Anlageflächen (5) einer jeden K geltasche (4) nacheinander durch Zustellung de Drehstahls in axialer Richtung der Werkstückspir delachse erfolgt.

## Claims

1. A method of finishing hardened ball cages for constant velocity joints that are provided with inner and outer ball-race-shaped bearing surfaces (3, 2) and ball pockets (4) for accommodating torque transmitting balls,
**characterized by** the method steps of
- Hard turning of the ball cage (1) for forming the inner ball-race-shaped bearing surface (3), an end contact surface (6) and two annular cylindrical clamping surfaces (7) defining the inner contact surface (3),
- Reclamping of the cage (1) by means of the cylindrical clamping surfaces (7) and the end contact surface (6),
- Hard turning of the ball cage (1) for forming the outer ball-race-shaped bearing surface (2) and the contact surfaces (5) to be formed in the ball pocket (4) for one ball each confronting each other in the axial direction.

2. Method according to claim 1, **characterized in that** all the turning operations on a ball cage (1) take place on the same lathe.

3. Method according to claim 1 or claim 2, **characterized in that** the two opposite contact surfaces (5) of each ball pocket (4) are machined simultaneously.

4. Method according to claim1 or claim 2, **characterized in that** the two opposite contact surfaces (5) of each ball pocket (4) are machined in succession by the infeed of the turning tool in the axial direction of the work-spindle axis.

## Revendications

1. Procédé pour la finition de cages à billes durcies destinées à des joints homocinétiques et pourvues de surfaces de palier intérieure et extérieure (3, 2) sous forme de bagues sphériques et de poches à billes (4) pour la réception de billes transmettant des couples de rotation,
**caractérisé par** les étapes consistant à :
- usiner en tournage dur la cage à billes (1) pour y former la surface de palier intérieure (3) en forme de bague sphérique, une surface d'appui frontale (6) et deux surfaces de serrage (7) cylindriques sous forme de bagues sphériques limitant la surface de palier intérieure (3),
- enserrer la cage (1) au moyen des surfaces de serrage (7) cylindriques et de la surface d'appui frontale (6),
- usiner en tournage la cage à billes pour y former la surface de palier extérieure (2) en forme de bague sphérique et des surfaces d'appui (5) pour chacune des billes situées en regard l'une de l'autre suivant la direction axiale destinées à être réalisées dans les poches à billes (4).

2. Procède selon la revendication 1, **caractérisé en ce que** la totalité des usinages au tour d'une cage à billes (1) sont effectues sur la même machine de tournage.

3. Procède selon la revendication 1 à 2, **caractérisé en ce que** les deux surfaces d'appui opposées (5) de chaque poche à bille (4) sont usinées simultanément.

4. Procède selon la revendication 1 à 2, **caractérisé en ce que** l'usinage des deux surfaces d'appui opposées (5) de chaque poche à bille (4) a lieu en succession en approchant l'outil de tournage en direction axiale de l'axe de la broche porte pièce.
